# EUROPÄISCHE PATENTSCHRIFT

(11) **EP 1 999 447 B1**
(45) Veröffentlichungstag und Bekanntmachung des Hinweises auf die Patenterteilung: **18.01.2012**
(21) Anmeldenummer: 07727351.4
(22) Anmeldetag: 26.03.2007
(51) Int. Cl.: G01M 17/02

(54) **VORRICHTUNG UND VERFAHREN ZUM PRÜFEN EINES REIFENS**
APPARATUS AND METHOD FOR TESTING A TYRE
DISPOSITIF ET PROCÉDÉ DE CONTRÔLE D'UN PNEU

(30) Priorität: 27.03.2006 DE 102006014058
(43) Veröffentlichungstag der Anmeldung: 10.12.2008
(73) Patentinhaber: Mähner, Bernward, 82205 Gilching (DE); Dengler, Stefan, 75365 Calw-Stammheim (DE)
(72) Erfinder: Mähner, Bernward, 82205 Gilching (DE); Dengler, Stefan, 75365 Calw-Stammheim (DE)
(74) Vertreter: Schober, Christoph D.
(86) Internationale Anmeldenummer: PCT/EP2007/052878
(87) Internationale Veröffentlichungsnummer: WO 2007/110412

(56) Entgegenhaltungen:
- EP-A- 0 547 364
- EP-A- 1 500 917
- EP-A2- 0 440 418
- EP-A2- 1 014 036
- DE-A1- 4 232 201
- DE-A1- 19 944 314
- US-A1- 2001 040 682

## Beschreibung

Die Erfindung betrifft eine Vorrichtung zum Prüfen eines Reifens, der einen Mittelpunkt, eine sich in einer axialen Richtung erstreckende Breite und einen in einer zu der axialen Richtung orthogonalen Reifenebene liegenden Durchmesser hat. Die Vorrichtung, die insbesondere eine Prüfung des Reifens mittels eines interferometrischen Messverfahrens ermöglicht, weist einen Messkopf auf, durch den der Reifen zum Erzeugen eines Messergebnisses abtastbar ist. Zudem weist die Vorrichtung ein Positionierungsmittel auf, durch das der Messkopf in eine ausgewählte Position bewegbar ist, das heißt in einer Beobachtungsposition positionierbar und in einer Beobachtungsrichtung ausrichtbar ist. Mit Hilfe von einer Steuer- und Anzeigeeinrichtung ist das Positionierungsmittel steuerbar und im Allgemeinen das Messergebnis anzeigbar. Die Erfindung bezieht sich ferner auf ein Verfahren zum Prüfen eines Reifens, bei dem eine solche Vorrichtung Anwendung finden kann.

Reifen werden zur Qualitätskontrolle und zur Reduzierung von Sicherheitsrisiken einer Werkstoffprüfung unterzogen, die es ermöglicht, fehlerhafte Stellen, so genannte Fehlstellen, zu erkennen. Vor allem dann, wenn es sich um benutzte Reifen handelt, die rundemeuert werden sollen, wird in der Regel eine zerstörungsfreie Werkstoffprüfung angewendet, die eine vergleichsweise schnelle Reihenuntersuchung gewährleistet. Häufig anzutreffen in der industriellen Praxis sind optische Messverfahren, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüflings darstellt. Um das auf Grund der zunehmenden Verbreitung von elektronischen Bildsensoren, wie zum Beispiel CCD-Sensoren, heutzutage in der Regel digitale Ergebnisbild zu erzeugen, ist es demzufolge erforderlich, den Zustand des Prüflings zwischen zwei Messungen durch Einwirkung einer mechanischen, thermischen oder pneumatischen Kraft zu verändern. Vorrichtungen zum Prüfen von Reifen, wie sie beispielsweise aus der DE 199 44 314 A1 bekannt sind, weisen aus diesem Grund eine Druckkammer auf, die entweder evakuiert oder mit Druck beaufschlagt wird, so dass sich der in der Druckkammer befindende Reifen infolge der Druckänderung verformt und damit von einem ersten Referenzzustand in einen zweiten Messzustand übergeht.

Im Unterschied zu der Holographie ermittelt die Shearographie nicht die Verformung an der Oberfläche eines Prüflings, sondern misst den Gradienten der Verformung. Dies ist darauf zurückzuführen, dass für die Shearographie ein so genanntes Shearingelement Anwendung findet, bei dem es sich um eine eine Bildverdopplung erzeugende Shearoptik, wie zum Beispiel ein optischer Keil, ein optisches Biprisma oder ein Michelson-Interferometer, handelt. Auf Grund des Shearingelements entstehen zwei geringfügig räumlich versetzte Bilder von dem Prüfling, die überlagert werden, um auf Grund der sich auf diese Weise ergebenden Interferenz ein Interferogramm zu erzeugen. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüflings geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, werden in der DE 42 31 578 A1 und EP 1 014 036 B1 beschrieben.

Ein Reifenprüfgerät, bei dem ein zu prüfender Reifen ohne Felge und Radscheibe in einer liegenden Position in einer Druckkammer angeordnet wird, offenbart die DE 199 44 314 A1. Das Reifenprüfgerät weist einen verstellbar angeordneten Messkopf auf, der sich in einem vorgegebenen Abstand von der inneren Umfangsfläche, der inneren Seitenfläche oder der äußeren Seitenfläche des Reifens positionieren lässt, um den Unterbau des Reifens, das heißt die Karkasse, einen häufig zwischen der Karkasse und der Lauffläche angeordneten Gürtel sowie die Seitenwand des Reifens zu prüfen. Der Messkopf weist eine Vielzahl an Beleuchtungseinheiten und Bildaufnahmeeinheiten auf, die unterschiedliche Abschnitte des Reifens gleichzeitig prüfen, um eine vergleichsweise schnelle Prüfung zu erreichen.

Die Bildaufnahmeeinheit des Messkopfs ist üblicherweise eine Kamera, die mit einem lichtempfindlichen Halbleitersensor, zum Beispiel einem CCD-oder CMOS-Sensor, versehen ist. Um ein aussagekräftiges Messergebnis zu erhalten, ist es erforderlich, das Gesichtsfeld der Kamera und den zu prüfenden Abschnitt des Reifens auf einander abzustimmen. Gewöhnlich erfolgt eine solche Abstimmung dadurch, dass der Messkopf in einer Beobachtungsposition positioniert und in einer Beobachtungsrichtung ausgerichtet wird, die sicherstellen, dass einerseits der gewählte Messabschnitt des Reifens vollständig im Gesichtsfeld der Kamera liegt und andererseits aufeinanderfolgende Messabschnitte sich ausreichend überlappen, um eine lückenlose Prüfung zu ermöglichen. Die Beobachtungsposition und die Beobachtungsrichtung des Messkopfs hängen von den Abmessungen des Reifens ab. Demzufolge sind aus der EP 1 284 409 A1 und DE 103 33 802 A1 Vorrichtungen bekannt, die es ermöglichen, den Reifen optisch, beispielsweise mittels so genannter Lichtschnitte, zu vermessen, um in Abhängigkeit von den auf diese Weise gewonnenen Daten den Messkopf zu positionieren und auszurichten. Nachteilig hierbei ist der gerätetechnische Aufwand, der für die Vermessung des Reifens erforderlich ist.

Vor allem dann, wenn Reifen eines bestimmten Typs einer Reihenuntersuchung unterzogen werden, genügt es daher meistens, die typenspezifischen Abmessungen des Reifens und die diesen zugeordneten Parameter des Messkopfs in einem Prüfprogramm zu hinterlegen, das für die Prüfung des jeweiligen Reifentyps in einen Speicher der Steuer- und Anzeigeeinrichtung geladen wird. Die Parameter des Messkopfs, das heißt die Beobachtungsposition und die Beobachtungsrichtung, müssen auf diese Weise zwar nur ein einziges Mal für einen bestimmten Reifentyp festgelegt werden, hängen aber von einem Bezugssystem ab, das von dem Positionierungsmittel der Prüfvorrichtung bestimmt wird. Folglich ist es nicht möglich, die reifenspezifischen Prüfprogramme für Prüfvorrichtungen mit unterschiedlichen Positionierungsmitteln zu verwenden.

Darüber hinaus ist die Kenntnis von den Parametern des Messkopfs in der Regel unentbehrlich, um das gewonnene Messergebnis auszuwerten. Denn handelt es sich bei dem Messergebnis um beispielsweise ein Ergebnisbild, das Interferenzlinien oder Phasendifferenzwinkeln zwischen zwei zeitlich versetzten Zuständen des geprüften Reifens zeigt, wie es beispielsweise aus der EP 1 014 036 B1 bekannt ist, dann vermittelt das Ergebnisbild dem Betrachter in den meisten Fällen keine Anhaltspunkte, die auf die räumliche Lage des dem Ergebnisbild zugeordneten Messabschnitts und damit einer in dem Ergebnisbild dargestellten Fehlstelle schließen lassen.

Die EP 0 440 418 A2 offenbart ein Verfahren zur Bestimmung des Profils einer Reifenlauffläche, bei dem der zu prüfende Reifen an einer Messvorrichtung derart angeordnet wird, dass sich die Rollachse des Reifens in einer X-Achse der Messvorrichtung erstreckt. Senkrecht zur X-Achse wird ein Y-Achse-Abstand von einem Abstandsmessmittel der Messvorrichtung gemessen und als Y-Daten gespeichert. Die Position des Abstandsmittels auf der X-Achse wird als X-Daten gespeichert. Das Abstandmessmittel wird entlang der X-Achse bewegt, und die Messung und das Speichern der Y-Achsen-Abstände und der Positionen des Abstandsmessmittels auf der X-Achse werden wiederholt. Die X-Daten und Y-Daten werden in zwei Datensätzen abgelegt, wobei der eine Datensatz sich auf den Crown-Abschnitt der Reifenlauffläche und der andere Datensatz sich auf die Schulterabschnitte der Reifenlauffläche bezieht. Die Messvorrichtung weist eine Spindel auf, die sich in Richtung der X-Achse erstreckt und von einem Motor angetrieben wird. Das Abstandsmessmittel ist mittels der Spindel in der X-Richtung bewegbar. Das Abstandsmessmittel umfasst einen Lasersensor, der geeignet ist, den Abstand von der Umfangsfläche des zu prüfenden Reifens in Richtung der Y-Achse berührungslos zu messen.

Die EP 0 547 364 A2 offenbart ein Verfahren und eine Vorrichtung zum Messen der Abnutzung der Lauffläche eines Reifens. Die Vorrichtung weist einen Messkopf auf, der mittels Laserstrahlen oder Schallwellen den Reifen berührungslos abtastet. Der Messkopf ist an einer Spindel angeordnet und parallel zu der Rollachse des Reifens bewegbar.

Die EP 1 500 917 A2 offenbart ein Verfahren und eine Vorrichtung zum Prüfen von Reifen. Die Vorrichtung weist einen Speicher auf, in dem Geometriedaten des Reifens gespeichert sind. Die Vorrichtung weist zudem einen Messkopf auf, mittels dem die Oberfläche des Reifens geprüft wird. Der Messkopf wird unter Berücksichtigung der Geometriedaten des Reifens positioniert. Bei den Geometriedaten des Reifens kann es sich um den Außendurchmesser, den Innendurchmesser oder die Breite des Reifens handeln. Die Geometriedaten können darüber hinaus den Innendurchmesser der Lauffläche des Reifens, die Maulweite des Reifens und die Kontur der Seitenwand des Reifens umfassen.

Die US 2001/0040682 A1 offenbart ein Verfahren und eine Vorrichtung zum Prüfen eines Werkstücks, bei dem es sich insbesondere um einen Reifen handeln kann. Das Verfahren ist ein Lichtschnittverfahren, bei dem ein dreidimensionales und farbiges Bild von dem Werkstück gewonnen wird. Es wird ein Messkopf eingesetzt, der eine Lichtquelle und eine Farbkamera umfasst.

Die DE 42 32 201 A1 offenbart eine Vorrichtung zur Querschnittsvermessung von Fahrzeugreifen. Die Vorrichtung weist Abtastelemente auf, die zum berührungslosen Abtasten der Innen- und Außenfläche des Fahrzeugreifens mittels Licht- oder Schallwellen dienen.

Der Erfindung liegt die Aufgabe zugrunde, eine Vorrichtung und ein Verfahren zum Prüfen eines Reifens zu schaffen, durch die sich eine einfache Steuerung des Messkopfs und eine zuverlässige Auswertung des Messergebnisses erzielen lassen.

Diese Aufgabe wird durch eine Vorrichtung gemäß Anspruch 1 und ein Verfahren gemäß Anspruch 18 gelöst. Bevorzugte Ausgestaltungen der Vorrichtung und des Verfahrens werden in den Ansprüchen 2 bis 17 und 19 bis 25 definiert.

Die erfindungsgemäße Vorrichtung zum Prüfen eines Reifens ist mit einem Messkopf versehen, durch den der Reifen zum Erzeugen eines Messergebnisses abtastbar ist. Der Messkopf hat zum Beispiel eine Ausgestaltung, wie sie in der EP 1 014 036 B1 beschrieben ist, um den Reifen mittels eines interferometrischen Messverfahrens zu prüfen. Die erfindungsgemäße Vorrichtung ist ferner mit einem Positionierungsmittel versehen, durch das der Messkopf in einer Beobachtungsposition positionierbar und in einer Beobachtungsrichtung ausrichtbar ist. Mit Hilfe von einer Steuer- und Anzeigeeinrichtung lässt sich das beispielsweise über zwei Translationsfreiheitsgrade und zwei Rotationsfreiheitsgrade verfügende Positionierungsmittel steuern und das beispielsweise in Form eines Ergebnisbilds vorliegende Messergebnis anzeigen.

Die Steuer- und Anzeigeeinrichtung weist wenigstens ein Bedienfeld, mittels dem die Koordinaten der Position des Messkopfs eingebbar sind, und/oder wenigstens ein Anzeigefeld, mittels dem die Koordinaten der Position des Messkopfs anzeigbar sind, auf. Die Koordinaten sind durch ein reifenspezifisches Koordinatensystem festgelegt, dessen Ursprung im Schnittpunkt von Reifenebene und einer Rollachse, die sich durch den Mittelpunkt des Reifens in der axialen Richtung erstreckt, liegt.

Das erfindungsgemäße Verfahren zum Prüfen eines Reifens weist folgende Verfahrensschritte auf:
a) ein Messkopf, durch den der Reifen abtastbar ist und der mit einer Abbildungsoptik versehen ist, die eine optische Achse hat, wird mittels eines Positionierungsmittels in einer Beobachtungsposition positioniert und in einer durch die optische Achse bestimmten Beobachtungsrichtung ausgerichtet;
b) mittels einer Steuer- und Anzeigeeinrichtung wird das Positionierungsmittel gesteuert;
c) die Koordinaten der Position des Messkopfs werden mittels der Steuer- und Anzeigeeinrichtung eingegeben und/oder ausgegeben;
d) die Koordinaten werden durch ein reifenspezifisches Koordinatensystem festgelegt, dessen Ursprung im Schnittpunkt von Reifenebene und einer Rollachse, die sich durch den Mittelpunkt des Reifens in der axialen Richtung erstreckt, liegt.

Die Erfindung beruht auf der Erkenntnis, für das Eingeben oder das Anzeigen der räumlichen Lage des Messkopfs Koordinaten zu verwenden, denen ein Koordinatensystem zugrunde liegt, dessen Ursprung im Schnittpunkt von Reifenebene und Rollachse liegt. Die Koordinaten charakterisieren auf diese Weise die Beobachtungsposition und die Beobachtungsrichtung des Messkopfs in einem reifenspezifischen Bezugsystem, das unabhängig von der Ausgestaltung des Positionierungsmittels und der Lage des Reifens während der Prüfung ist und das damit Messergebnisse, die mittels unterschiedlicher Prüfvorrichtungen gewonnen werden, vergleichbar macht. Die Erfindung ermöglicht es, die Beobachtungsposition und die Beobachtungsrichtung des Messkopfs in Bezug auf den Reifen festzulegen und in einem reifenspezifischen Prüfprogramm abzuspeichern. Das Prüfprogramm lässt sich dann vor dem eigentlichen Testen des Reifens in die Steuer- und Anzeigeeinrichtung laden, um den Messkopf in die Beobachtungsposition zu bewegen und in der Beobachtungsrichtung auszurichten. Da das Prüfprogramm reifenspezifisch und nicht abhängig ist von der Prüfvorrichtung, mittels der es erstellt worden ist, können die betroffenen Reifen mittels des Prüfprogramms auch auf anderen Prüfvorrichtungen geprüft werden.

Die Koordinaten sind vorteilhafterweise Zylinderkoordinaten, welche die Beobachtungsposition des Messkopfs im Raum durch den Abstand eines Punkts, welcher der Beobachtungsposition in der Reifenebene entspricht, vom Ursprung (Radiusvektor r), den Winkel, den ein durch diesen Punkt gehender Strahl mit der Achse des Koordinatensystems einschließt (Polarwinkel ϕ), und die Höhe der Beobachtungsposition über der Reifenebene festlegen.

Die Reifenebene ist vorteilhafterweise die Reifenmittenebene. Unter Reifenmittenebene im voranstehenden Sinn wird die Ebene verstanden, die sich durch die Mitte des Reifens in axialer Richtung erstreckt. Hat der zu prüfende Reifen, wie in den meisten Fällen, einen symmetrischen Aufbau, dann entspricht die Reifenmittenebene der Symmetrieebene. Verfügt der Reifen hingegen über einen asymmetrischen Aufbau, wie es gelegentlich bei Flugzeugreifen anzutreffen ist, oder wird der Reifen, wie es in der DE 199 44 314 A1 beschrieben ist, in einer liegenden Stellung geprüft und verformt sich auf Grund des Gewichts des Reifens die Seitenwand, auf welcher der Reifen aufliegt, in einem nicht zu vernachlässigenden Maß, dann ist die Reifenmittenebene zweckmäßigerweise die Ebene, die durch die Mitte der Maulweite des Reifens in axialer Richtung oder durch den so genannten Scheitel des Reifens geht. Ist die Größe der Breite und der Maulweite des Reifens sowie die Lage des Scheitels des Reifens unbekannt, dann wird der Ursprung des Koordinatensystems zweckmäßigerweise in die so genannte Maschinenbasisebene gelegt.

Bevorzugt ist durch das Positionierungsmittel der Messkopf in der axialen Richtung bewegbar. Die Steuer- und Anzeigeeinrichtung weist in diesem Fall zweckmäßigerweise ein Anzeigefeld auf, mittels dem die räumliche Verschiebung des Messkopfs in der axialen Richtung anzeigbar ist. Alternativ oder zusätzlich kann die Steuer- und Anzeigeeinrichtung ein Bedienfeld aufweisen, mittels dem die räumliche Verschiebung des Messkopfs in der axialen Richtung eingebbar ist.

In einer weiteren bevorzugten Ausgestaltung der erfindungsgemäßen Vorrichtung ist durch das Positionierungsmittel der Messkopf in einer radialen Richtung bewegbar. In diesem Fall weist die Steuer- und Anzeigeeinrichtung zweckmäßigerweise ein Anzeigefeld, mittels dem die räumliche Verschiebung des Messkopfs in radialer Richtung anzeigbar ist, und/oder ein Bedienfeld, mittels dem die räumliche Verschiebung des Messkopfs in radialer Richtung eingebbar ist, auf.

Erfindungsgemäßen sind durch das Positionierungsmittel der Messkopf und der Reifen relativ zueinander um die Rollachse drehbar. Die Steuer- und Anzeigeeinrichtung weist in diesem Fall zweckmäßigerweise ein Anzeigefeld, mittels dem der Drehwinkel der Rotation des Messkopfs relativ zu dem Reifen, das heißt der Polarwinkel, anzeigbar ist. Alternativ oder zusätzlich kann die Steuer- und Anzeigeeinrichtung ein Bedienfeld aufweisen, mittels dem der Drehwinkel der Rotation des Messkopfs relativ zu dem Reifen eingegeben werden kann.

In einer weiteren bevorzugten Ausgestaltung der erfindungsgemäßen Vorrichtung ist durch das Positionierungsmittel der Messkopf um eine orthogonal zu der Rollachse verlaufende Schwenkachse drehbar.

Der Messkopf ist mit einer Abbildungsoptik versehen, die eine optische Achse und zweckmäßigerweise einen auf der optischen Achse liegenden Hauptpunkt hat. In diesem Fall hat es sich als vorteilhaft erwiesen, wenn die Beobachtungsposition durch den Hauptpunkt und die Beobachtungsrichtung durch die optische Achse festgelegt werden, wobei die Beobachtungsrichtung einem von dem Hauptpunkt ausgehenden und sich entlang der objektseitigen optischen Achse zu der Oberfläche des zu prüfenden Reifens erstreckenden Strahl entspricht. Die optische Achse und die Reifenebene schließen einen Neigungswinkel ein, der auch 0° betragen kann, wenn die optische Achse parallel zu der Reifenebene verläuft. Die Steuer- und Anzeigeeinrichtung weist vorteilhafterweise ein Anzeigefeld zum Anzeigen des Neigungswinkels und/oder ein Bedienfeld zum Eingeben des die Beobachtungsrichtung festlegenden Neigungswinkels auf.

Bevorzugt ermöglichen eine erste Verstelleinheit und eine zweite Verstelleinheit eine Translationsbewegung des Messkopfs in beispielsweise horizontaler und vertikaler Richtung, wenn der Reifen in einer liegenden Stellung geprüft wird. Eine dritte Verstelleinheit und eine vierte Verstelleinheit ermöglichen vorteilhafterweise eine Rotationsbewegung des Messkopfs in Bezug auf den Reifen. Wird die erfindungsgemäße Vorrichtung mit sämtlichen dieser vier Verstelleinheiten versehen, dann verfügt das Positionierungsmittel über zwei Translationsfreiheitsgrade und zwei Rotationsfreiheitsgrade, die ein exaktes Positionieren und Ausrichten des Messkopfs sicherstellen. Je nach Anwendungsfall kann das Positionierungsmittel weniger, aber auch mehr als vier Verstelleinheiten aufweisen. Zudem ist es möglich, die erste Verstelleinheit und/oder die zweite Verstelleinheit durch eine Verstelleinheit zu ersetzen, die dem Positionierungsmittel keinen Translationsfreiheitsgrad, sondern einen weiteren Rotationsfreiheitsgrad verleiht.

Bevorzugt umfasst die Steuer- und Anzeigeeinrichtung, die von dem Messkopf und dem Positionierungsmittel auch räumlich getrennt und beispielsweise via Internet mit diesen verbunden sein kann, einen Rechner, ein Eingabegerät für das Bedienfeld und einen Monitor für das Anzeigefeld. Das Eingabegerät kann beispielsweise eine Tastatur, eine Maus oder ein Touchscreen sein. In diesem Zusammenhang hat es sich als vorteilhaft erwiesen, wenn die Steuer- und Anzeigeeinrichtung eine Benutzungsschnittstelle umfasst, bei der das Anzeigefeld zugleich ein Bedienfeld ist. Eine solche Benutzungsschnittstelle lässt sich beispielsweise durch eine auf dem Monitor dargestellte grafische Bedienoberfläche realisieren.

Um ein interferometrisches Messverfahren durchzuführen, umfasst der Messkopf vorteilhafterweise eine Beleuchtungseinheit, durch welche der Reifen beleuchtet wird, ein Shearingelement, durch das die von dem Reifen rückgestreuten Lichtbündel zur Interferenz gebracht werden, und eine Kamera, die mit einem Objektiv versehen ist, das zur Aufnahme der interferierenden Lichtbündel im Strahlengang des Shearingelements angeordnet ist.

Einzelheiten und weitere Vorteile der Erfindung ergeben sich aus der nachfolgenden Beschreibung bevorzugter Ausführungsbeispiele. In den die Ausführungsbeispiele lediglich schematisch darstellenden Zeichnungen veranschaulichen im Einzelnen:
- Fig. 1: eine schematische Darstellung des Messkopfs und der Steuer- und Anzeigeeinrichtung einer Vorrichtung zum Prüfen eines Reifens;
- Fig. 2: eine schematische Darstellung eines Positionierungsmittels einer herkömmlichen Vorrichtung und eines Querschnitts durch einen mit einer solchen Vorrichtung zu prüfenden Reifen, der eine erste Größe hat;
- Fig. 3: eine Darstellung gemäß Fig. 2, die einen durch eine herkömmliche Vorrichtung zu prüfenden Reifen zeigt, der eine zweite Größe hat;
- Fig. 4: eine Darstellung gemäß Fig. 2, die den Unterschied zwischen einer herkömmlichen Vorrichtung und der erfindungsgemäßen Vorrichtung veranschaulicht;
- Fig. 5: eine Draufsicht auf den mit der erfindungsgemäßen Vorrichtung zu prüfenden Reifen;
- Fig. 6: eine Darstellung gemäß Fig. 2, welche die erfindungsgemäße Vorrichtung veranschaulicht, und
- Fig. 7: eine Darstellung gemäß Fig. 3, welche die erfindungsgemäße Vorrichtung veranschaulicht.

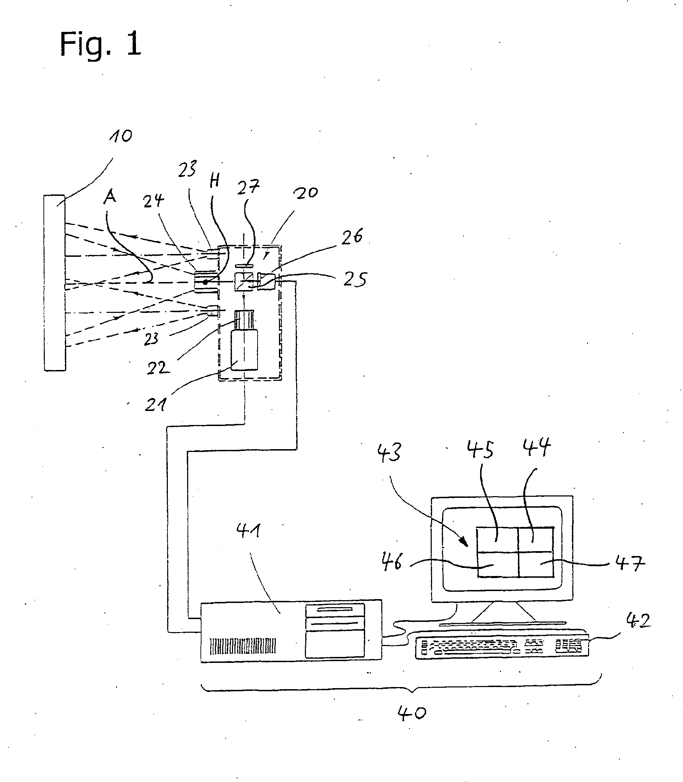

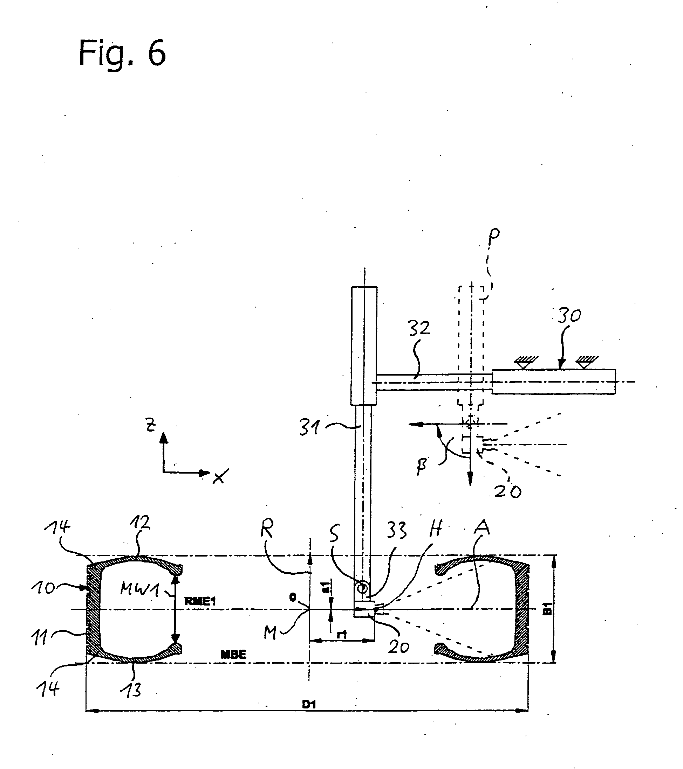

Die in Fig. 1 dargestellte Vorrichtung dient zum Prüfen eines Reifens 10 mittels eines interferometrischen Messverfahrens. Wie insbesondere Fig. 6 zu erkennen gibt, weist die Vorrichtung zu diesem Zweck einen Messkopf 20, ein Positionierungsmittel 30, durch das der Messkopf 20 in einer Beobachtungsposition positionierbar und in einer Beobachtungsrichtung ausrichtbar ist, und eine Steuer- und Anzeigeeinrichtung 40 auf. Um den Reifen 10 in zwei unterschiedlichen Verformungszuständen zu prüfen, kann der Reifen 10 in einer nicht dargestellten Druckkammer angeordnet sein, wie sie beispielsweise in der DE 199 44 314 A1 beschrieben ist. Die unterschiedlichen Verformungszustände des Reifens 10 müssen jedoch nicht zwangsläufig durch eine Druckänderung in der Druckkammer hervorgerufen werden, sondern können auf jede geeignete Weise erzeugt werden.

Wie Fig. 1 ferner zu erkennen gibt, weist der Messkopf 20 ein Objektiv 24, eine mit einem Objektiv 22 und einem nicht dargestellten Halbleitersensor, zum Beispiel einen CCD- oder CMOS-Sensor, versehene Kamera 21, eine Vielzahl an als Beleuchtungseinheit fungierenden Laserdioden 23 und ein sich aus einem Strahlteiler 25, einem bewegbaren Spiegel 26 und einem stationären Spiegel 27 zusammensetzendes Shearingelement auf. Mittels der kohärentes Licht emittierenden Laserdioden 23 wird der Reifen 10 beleuchtet. Üblicherweise wird zum Prüfen der inneren Umfangsfläche des Reifens 10 sowohl der Bereich des Gürtels des Reifens 10 als auch die sich im Übergang von der Lauffläche 11 auf die Seitenwände 12, 13 befindende Schulter 14 des Reifens 10, so genannter Crown-Shot, beleuchtet. Die Seitenwände 12, 13 werden im Allgemeinen von außen beleuchtet. Im Bedarfsfall kann auch die Lauffläche 11 von außen beleuchtet werden. Das Objektiv 24 stellt eine Abbildungsoptik dar, die eine optische Achse A und einen auf der optischen Achse A liegenden objektseitigen Hauptpunkt H hat. Die von der Oberfläche des Reifens 10 rückgestreuten Lichtbündel werden mittels des Objektivs 24 aufgenommen und auf das Shearingelement 25, 26, 27 abgebildet sowie mit Hilfe von diesem zur Interferenz gebracht. Die interferierenden Lichtbündel werden mittels des im Strahlengang des Shearingelements 25, 26, 27 angeordneten Objektivs 22 als Interferogramm aufgenommen und dem Halbleitersensor der Kamera 21 zugeführt, der das Interferogramm elektronisch verarbeitet.

Die durch die elektronische Verarbeitung generierten Daten werden an die Steuer- und Anzeigeeinrichtung 40 übertragen. Die Steuer- und Anzeigeeinrichtung 40 umfasst einen Rechner 41, mittels dem die Daten gespeichert und verarbeitet werden, ein Eingabegerät 42 in Form einer Tastatur und einer nicht dargestellten Maus sowie einen Monitor 43, der je nach Anwendungsfall als Touchscreen ausgestaltet und damit ein alternatives oder zusätzliches Eingabegerät sein kann.

Die Steuer- und Anzeigeeinrichtung 40 dient zum einen dazu, dass von dem Messkopf 20 durch Abtasten des Reifens 10 erzeugte Messergebnis in Form von Ergebnisbildern anzuzeigen. Zum anderen hat die Steuer- und Anzeigeeinrichtung 40 die Funktion, das Positionierungsmittel 30 zu steuern, um den Messkopf 20 in einer Beobachtungsposition zu positionieren und in einer Beobachtungsrichtung auszurichten. Die Beobachtungsposition und die Beobachtungsrichtung des Messkopfs 20 werden für einen bestimmten Reifentyp festgelegt und mittels des Rechners 41 in einem Prüfprogramm abgespeichert. Das Prüfprogramm wird dann jedes Mal in den Rechner 41 geladen, wenn ein entsprechender Reifen 10 zu prüfen ist. Dies bedeutet, dass es für das Testen des Reifens 10 auf Fehlstellen nicht erforderlich ist, zuvor jedes Mal die Beobachtungsposition und die Beobachtungsrichtung festzulegen, sondern dass es hierfür ausreichend ist, wenn einmal ein reifenspezifisches Prüfprogramm erstellt wird. Für die Erstellung des Prüfprogramms kann es erforderlich sein, die optische Achse A und/oder den Hauptpunkt H, den der verwendete Messkopf 20 hat, zu ermitteln. In diesem Fall wird die optische Achse A oder der Hauptpunkt H zweckmäßigerweise durch das Positionierungsmittel 30 mit Hilfe von zum Beispiel einem Kalibrierkörper eingemessen.

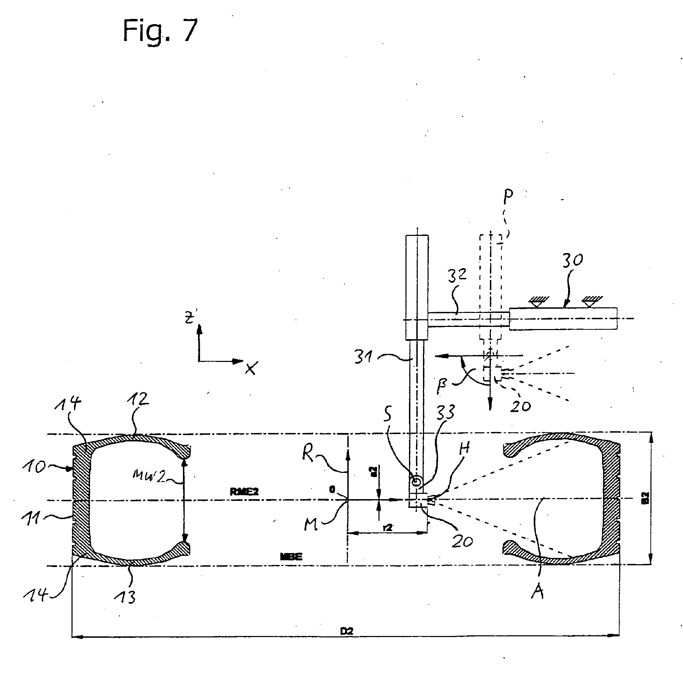

Wie insbesondere die Fig. 6 und 7 zu erkennen geben, weist das Positionierungsmittel 30 eine erste Verstelleinheit 31 auf, durch die der Messkopf 20 in einer axialen Richtung z des Reifens 10 bewegbar ist. Wird der Reifen 10 in einer liegenden Stellung geprüft, dann verläuft die axiale Richtung z vertikal. Das Positionierungsmittel 30 weist ferner eine zweite Verstelleinheit 32 auf, durch die der Messkopf 20 in einer radialen Richtung x des Reifens 10 bewegbar ist. Die radiale Richtung x verläuft horizontal, wenn der Reifen 10 in der liegenden Stellung geprüft wird. Darüber hinaus weist das Positionierungsmittel 30 eine dritte Verstelleinheit auf, die nicht dargestellt ist und durch die der Messkopf 20 und der Reifen 10 relativ zueinander um eine sich in axialer Richtung z erstreckende und durch den Mittelpunkt M des Reifens 10 verlaufende Rollachse R drehbar sind. Die dritte Verstelleinheit lässt sich beispielsweise durch einen Drehteller realisieren, auf dem der Reifen 10 liegend angeordnet ist. Das Positionierungsmittel 30 umfasst schließlich eine vierte Verstelleinheit 33, durch die der Messkopf 20 um eine orthogonal zu der Rollachse R verlaufende Schwenkachse S drehbar ist.

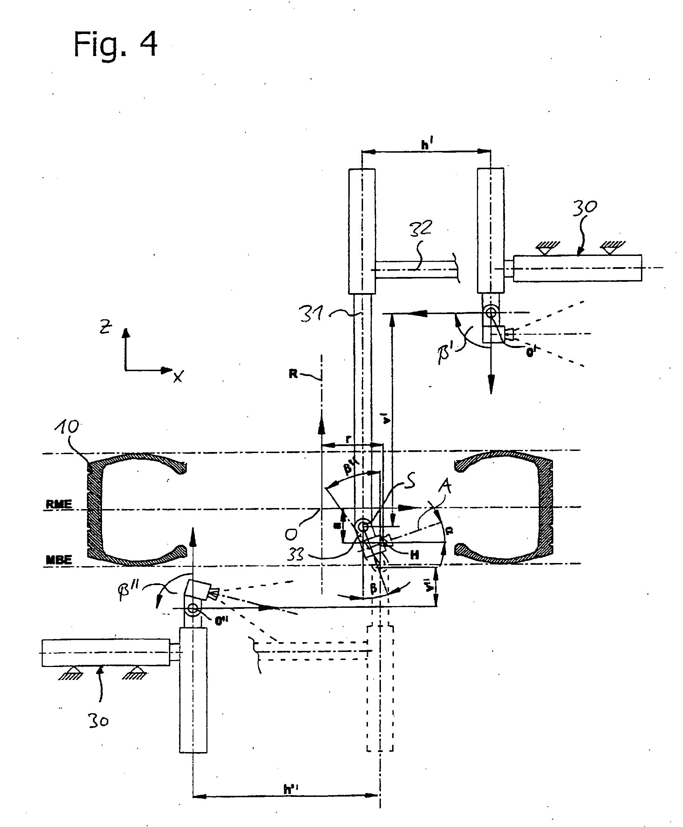

Wie in Fig. 4 zu erkennen ist, erfolgt die durch die erste Verstelleinheit 31 erzeugte räumliche Verschiebung a des Messkopfs 20 in axialer Richtung z und die durch die zweite Verstelleinheit 32 erzeugte räumliche Verschiebung r des Messkopfs 20 in radialer Richtung x in Bezug auf den objektseitigen Hauptpunkt H des Objektivs 24 und in einem Koordinatensystem, dessen Ursprung 0 im Schnittpunkt von Rollachse R und einer Reifenmittenebene RME liegt. Wie die Fig. 6 und 7 zu erkennen geben, geht die Rollachse R durch den Mittelpunkt M des Reifens 10. Der Abstand der Rollachse R von der Lauffläche 11 des Reifens 10 beträgt folglich die Hälfte des Durchmessers D₁, D₂ des Reifens 10. Die Reifenmittenebene RME₁, RME₂ erstreckt sich in axialer Richtung z in der Mitte der Maulweite MW₁, MW₂ des Reifens 10. Verfügt der Reifen 10 über einen symmetrischen Aufbau, dann erstreckt sich die Reifenmittenebene RME₁, RME₂ zugleich durch die Mitte der Breite B₁, B₂ des Reifens 10, wie in den Fig. 6 und 7 gezeigt ist. Wird der Reifen 10 in einer liegenden Stellung geprüft und liegt demzufolge eine der Seitenwände 12, 13 des Reifens 10 auf der Maschinenbasisebene MBE auf, dann kann es insbesondere bei relativ schweren Reifen 10 vorkommen, dass sich die Seitenwand 13 unter dem Gewicht des Reifens 10 in einem nicht zu vernachlässigenden Maß verformt. In diesem Fall fallen die Mitte der Maulweite MW₁, MW₂ und die Mitte der im unbelasteten Zustand des Reifens 10 gemessenen Breite B₁, B₂ auseinander. Um vergleichbare Messergebnisse zu erzielen, erstreckt sich die den Ursprung 0 definierende Reifenmittenebene RME dann in der Mitte der Maulweite MW₁, MW₂ oder durch den Scheitel des Reifens 10. Alternativ kann in einem solchen Fall der Ursprung 0 des Koordinatensystems in den Schnittpunkt zwischen der Rollachse R und der Maschinenbasisebene MBE gelegt werden. Letzteres bietet sich auch dann an, wenn die Größe der Breite B₁, B₂ und der Maulweite MW₁, MW₂ des Reifens 10 sowie die Lage des Scheitels des Reifens 10 unbekannt sind.

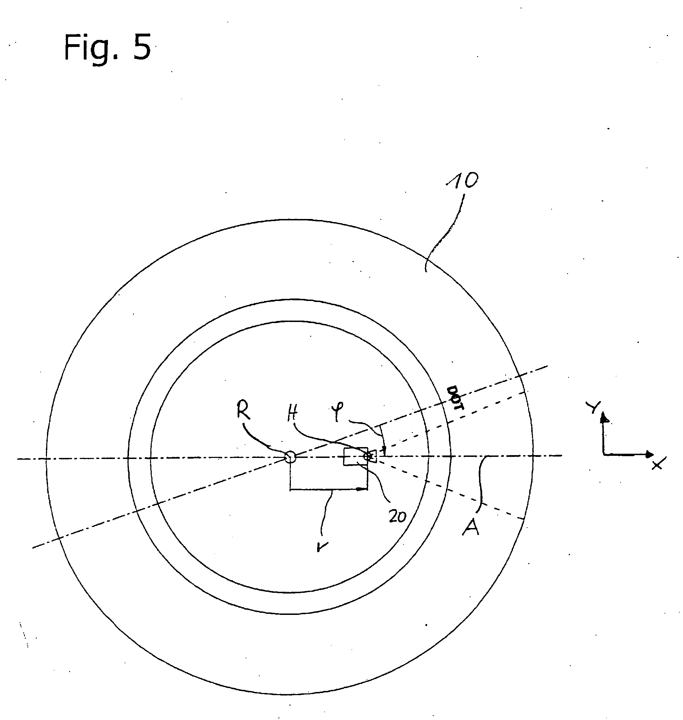

Wie insbesondere Fig. 5 zu erkennen gibt, erstreckt sich der Drehwinkel ϕ der von der dritten Verstelleinheit hervorgerufenen Rotation des Messkopfs 20 relativ zu dem Reifen 10 in der Reifenmittenebene RME. Der Scheitel des Drehwinkels ϕ liegt im Ursprung 0 des Koordinatensystems. Ein Schenkel des Drehwinkels ϕ entspricht einer Koordinatenachse des Koordinatensystems, die zweckmäßigerweise durch eine ausgewählte Kennzeichnung des Reifens 10 verläuft. Bei der Kennzeichnung handelt es sich im vorliegenden Fall um die unter anderem das Herstellungsdatum des Reifens 10 angebende DOT-Nummer. Der Schwenkwinkel β der von der vierten Verstelleinheit 33 hervorgerufenen Rotation des Messkopfs 20 um die Schwenkachse S wird in Bezug auf eine Ebene angegeben, in der die Rollachse R liegt und die in Umfangsrichtung des Reifens 10 von der Koordinationsachse aus um den Drehwinkel ϕ gedreht ist. Die Schwenkachse S ist folglich parallel zu der Tangente an den Reifen 10 in der jeweiligen Position des Messkopfs 20.

Wie Fig. 4 zu erkennen gibt, ist der Hauptpunkt H des Objektivs 24 versetzt zu der Schwenkachse S angeordnet. Eine Rotation der Verstelleinheit 33 um den Schwenkwinkel β ist demzufolge nicht ausreichend, um den Messkopf 20 in der gewünschten Beobachtungsrichtung auszurichten, ohne die Beobachtungsposition zu verändern. Vielmehr ist es erforderlich, zusätzlich die Verstelleinheiten 31 und 32 zu bewegen, um beim Einstellen des Neigungswinkels α zwischen der die Beobachtungsrichtung festlegenden optischen Achse A und der Reifenmittenebene RME die Beobachtungsposition zu erhalten.

Die Steuer- und Anzeigeeinrichtung 40 verfügt über eine grafische Bedienoberfläche, die, wie Fig. 1 zu erkennen gibt, durch den Monitor 43 wiedergegeben wird. Die grafische Bedienoberfläche ist mit Anzeige- und Bedienfeldern 44, 45, 46 versehen, mittels denen die axiale Verschiebung a, die radiale Verschiebung r und der Drehwinkel ϕ und damit die Koordinaten der Beobachtungsposition des Messkopfes 20 angezeigt und eingegeben werden. Die Steuer- und Anzeigeeinrichtung 40 weist überdies ein Anzeige- und Bedienfeld 47 auf, mittels dem der Neigungswinkel α und damit die Beobachtungsrichtung des Messkopfs 20 angezeigt und eingegeben werden.

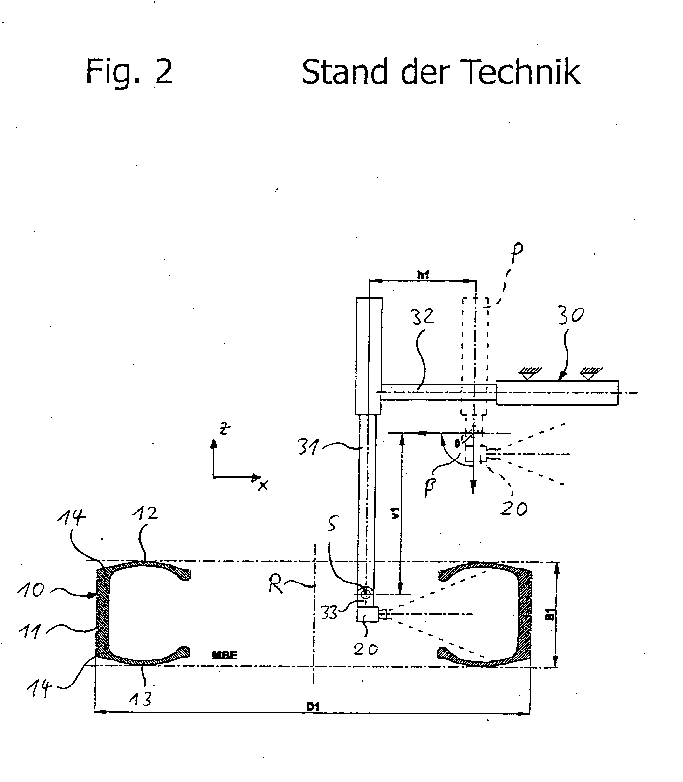

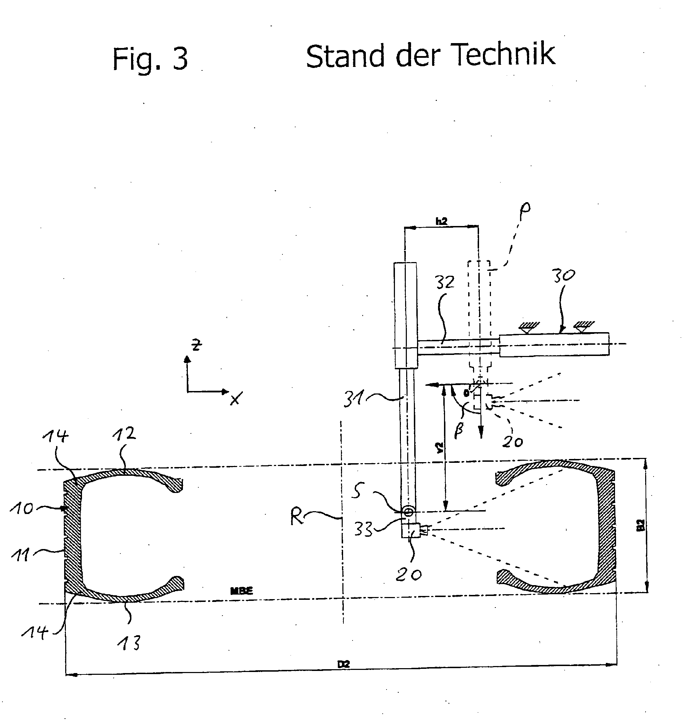

Die zuvor beschriebene Vorrichtung zum Prüfen des Reifens 10 zeichnet sich durch ein reifenspezifisches Bezugssystem aus, das unabhängig von der Ausgestaltung des Positionierungsmittels 30 und der Lage des Reifens 10 während der Prüfung ist. Dies wird besonders deutlich bei einem Vergleich der eine herkömmliche Vorrichtung zeigenden Fig: 2 und 3 mit den die erfindungsgemäße Vorrichtung zeigenden Fig. 6 und 7. Bei der herkömmlichen Vorrichtung gemäß den Fig. 2 und 3 werden die Koordinaten der Position des Messkopfs 20 durch ein Koordinatensystem festgelegt, dessen Ursprung 0' sich in einer in der Regel auch als Parkposition P benutzten Ausgangsstellung des Positionierungsmittels 30 oberhalb des Reifens 10 befindet. Wird die relative Drehung von Messkopf 20 und Reifen 10 um die Rollachse R unberücksichtigt gelassen, dann wird die räumliche Lage des Messkopfs 20 durch die horizontale Verschiebung h₁, h₂ der Verstelleinheit 32 und die vertikale Verschiebung v₁, v₂ der Verstelleinheit 31 bestimmt. Die Fig. 2 und 3 geben anschaulich zu erkennen, dass sowohl die horizontale Verschiebung h₁, h₂ als auch die vertikale Verschiebung v₁, v₂, die erforderlich ist, um den Messkopf beispielsweise in eine auf einen Crown-Shot ausgerichtete Beobachtungsposition zu bringen, wie es in den Fig. 2 und 3 dargestellt ist, von der Lage des Reifens 10 auf der Maschinenbasisebene MBE und dem Abstand des Ursprungs 0' von der Maschinenbasisebene MBE abhängen.

Fig. 4 veranschaulicht, dass die Ausgangsstellung des Positionierungsmittels 30 herkömmlicher Vorrichtungen und damit die Lage des Ursprungs 0', 0" des Koordinatensystems unterschiedlich sein können, so dass die Angabe der horizontalen Verschiebung h', h", der vertikalen Verschiebung v', v" und des Schwenkwinkels β', β" ohne Kenntnis der Lage des Ursprungs 0', 0" keine Auskunft über die Beobachtungsposition und die Beobachtungsrichtung des Messkopfs 20 gibt. Die von verschiedenen Prüfvorrichtungen gewonnenen Messergebnisse sind daher nicht vergleichbar.

Im Unterschied hierzu hängt die axiale Verschiebung a₁, a₂ und die radiale Verschiebung r₁, r₂ des Positionierungsmittels 30 der erfindungsgemäßen Vorrichtung lediglich von der Größe, das heißt dem Durchmesser D₁, D₂ und der Breite B₁, B₂, des Reifens 10 ab, wie anschaulich die Fig. 6 und 7 zu erkennen geben. Die der axialen Verschiebung a₁, a₂ und der radialen Verschiebung r₁, r₂ entsprechenden Koordinaten des Hauptpunkts H und damit die Beobachtungsposition des Messkopfs 20 sind daher reifenspezifisch. Das Gleiche gilt für die Beobachtungsrichtung des Messkopfs 20, die durch den Neigungswinkel α der optischen Achse A und nicht durch den Schwenkwinkel β, der von der Ausgangsstellung des jeweiligen Positionierungsmittels abhängt, festgelegt wird, so dass die Messergebnisse für Reifen derselben Größe vergleichbar sind, und zwar auch dann, wenn die Messergebnisse von Prüfvorrichtungen stammen, die sich in der Ausgangsstellung des Positionierungsmittels 30 unterscheiden.

Nicht zuletzt bietet die erfindungsgemäße Vorrichtung die Möglichkeit Abweichungen im Strahlengang der Abbildungsoptik zu kompensieren und damit Richtungsfehler zu eliminieren.

### Bezugszeichen liste

- 10: Reifen
- 11: Lauffläche
- 12: Seitenwand
- 13: Seitenwand
- 14: Schulter

- 20: Messkopf
- 21: Kamera
- 22: Objektiv
- 23: Laserdiode
- 24: Objektiv
- 25: Strahlteiler
- 26: bewegbarer Spiegel
- 27: stationärer Spiegel

- 30: Positionierungsmittel
- 31: Verstelleinheit
- 32: Verstelleinheit
- 33: Verstelleinheit

- 40: Steuer- und Anzeigeeinrichtung
- 41: Rechner
- 42: Eingabegerät
- 43: Monitor
- 44: Anzeige- und Bedienfeld
- 45: Anzeige- und Bedienfeld
- 46: Anzeige- und Bedienfeld
- 47: Anzeige- und Bedienfeld

- 0: Ursprung
- 0': Ursprung
- 0": Ursprung
- A: optische Achse
- B₁: Breite
- B₂: Breite
- D₁: Durchmesser
- D₂: Durchmesser
- DOT: Kennzeichnung
- H: Hauptpunkt
- M: Mittelpunkt
- MBE: Maschinenbasisebene
- MW₁: Maulweite
- MW₂: Maulweite
- P: Parkposition
- R: Rollachse
- RME: Reifenmittenebene
- RME₁: Reifenmittenebene
- RME₂: Reifenmittenebene
- S: Schwenkachse

- a: axiale Verschiebung
- a₁: axiale Verschiebung
- a₂: axiale Verschiebung
- h': horizontale Verschiebung
- h": horizontale Verschiebung
- h₁: horizontale Verschiebung
- h₂: horizontale Verschiebung
- r: radiale Verschiebung
- r₁: radiale Verschiebung
- r₂: radiale Verschiebung

- v': vertikale Verschiebung
- v": vertikale Verschiebung
- v₁: vertikale Verschiebung
- v₂: vertikale Verschiebung
- x: horizontale Richtung
- y: horizontale Richtung
- z: vertikale Richtung
- α: Neigungswinkel
- β: Schwenkwinkel
- β': Schwenkwinkel
- ϕ: Drehwinkel

## Patentansprüche

1. Vorrichtung zum optischen Prüfen eines Reifens (10), der einen Mittelpunkt (M), eine sich in einer axialen Richtung (z) erstreckende Breite (B₁, B₂) und einen in einer zu der axialen Richtung (z) orthogonalen Reifenebene (RME, RME₁, RME₂, MBE) liegenden Durchmesser (D₁, D₂) hat, mit
einem Messkopf (20), durch den der Reifen (10) abtastbar ist und der mit einer Abbildungsoptik (24) versehen ist, die eine optische Achse (A) hat;
einem Positionierungsmittel (30), durch das der Messkopf (20) in einer Beobachtungsposition positionierbar und in einer durch die optische Achse (A) bestimmten Beobachtungsrichtung ausrichtbar ist, und
einer Steuer- und Anzeigeeinrichtung (40), durch die das Positionierungsmittel (30) steuerbar ist;
wobei durch das Positionierungsmittel (30) der Messkopf (20) und der Reifen (10) relativ zueinander um eine Rollachse (R), die sich durch den Mittelpunkt (M) des Reifens (10) in der axialen Richtung (z) erstreckt, drehbar sind;
wobei die Steuer- und Anzeigeeinrichtung (40) wenigstens ein Bedienfeld (44, 45, 46, 47), mittels dem die Koordinaten der Position des Messkopfs (20) eingebbar sind, oder wenigstens ein Anzeigefeld (44, 45, 46, 47), mittels dem die Koordinaten der Position des Messkopfs (20) anzeigbar sind, aufweist, und
wobei die Koordinaten durch ein reifenspezifisches Koordinatensystem festgelegt sind, dessen Ursprung (0) im Schnittpunkt von Reifenebene (RME, RME₁, RME₂, MBE) und der Rollachse (R) liegt.

2. Vorrichtung nach Anspruch 1, **dadurch gekennzeichnet, dass** durch das Positionierungsmittel (30) der Messkopf (20) in der axialen Richtung (z) bewegbar ist.

3. Vorrichtung nach Anspruch 2, **dadurch gekennzeichnet, dass** die Steuer- und Anzeigeeinrichtung (40) ein Anzeigefeld (44) zum Anzeigen der räumlichen Verschiebung (a, a₁, a₂) des Messkopfs (20) in der axialen Richtung (z) aufweist.

4. Vorrichtung nach Anspruch 2 oder 3, **dadurch gekennzeichnet, dass** die Steuer- und Anzeigeeinrichtung (40) ein Bedienfeld (44) zum Eingeben der räumlichen Verschiebung (a, a₁, a₂) des Messkopfs (20) in der axialen Richtung (z) aufweist.

5. Vorrichtung nach einem der Ansprüche 1 bis 4, **dadurch gekennzeichnet, dass** durch das Positionierungsmittel (30) der Messkopf (20) in einer radialen Richtung (x) bewegbar ist.

6. Vorrichtung nach Anspruch 5, **dadurch gekennzeichnet, dass** die Steuer- und Anzeigeeinrichtung (40) ein Anzeigefeld (45) zum Anzeigen der räumlichen Verschiebung (r, r₁, r₂) des Messkopfs (20) in radialer Richtung (x) aufweist.

7. Vorrichtung nach Anspruch 5 oder 6, **dadurch gekennzeichnet, dass** die Steuer- und Anzeigeeinrichtung (40) ein Bedienfeld (45) zum Eingeben der räumlichen Verschiebung (r, r₁, r₂) des Messkopfs (20) in radialer Richtung (x) aufweist.

8. Vorrichtung nach einem der Ansprüche 1 bis 7, **dadurch gekennzeichnet, dass** die Steuer- und Anzeigeeinrichtung (40) ein Anzeigefeld (46) zum Anzeigen des Drehwinkels (ϕ) der Rotation des Messkopfs (20) relativ zu dem Reifen (10) aufweist.

9. Vorrichtung nach Anspruch 8, **dadurch gekennzeichnet, dass** die Steuer- und Anzeigeeinrichtung (40) ein Bedienfeld (46) zum Eingeben des Drehwinkels (ϕ) der Rotation des Messkopfs (20) relativ zu dem Reifen (10) aufweist.

10. Vorrichtung nach einem der Ansprüche 1 bis 9, **dadurch gekennzeichnet, dass** durch das Positionierungsmittel (30) der Messkopf (20) um eine orthogonal zu der Rollachse (R) verlaufenden Schwenkachse (S) drehbar ist.

11. Vorrichtung nach einem der Ansprüche 1 bis 10, **dadurch gekennzeichnet, dass** die Abbildungsoptik (24) einen auf der optischen Achse (A) liegenden Hauptpunkt (H) hat, wobei die Beobachtungsposition durch den Hauptpunkt (H) bestimmt wird.

12. Vorrichtung nach Anspruch 11, **dadurch gekennzeichnet, dass** die optische Achse (A) und die Reifenebene (RME, RME₁, RME₂, MBE) einen Neigungswinkel (α) einschließen, wobei die Steuer- und Anzeigeeinrichtung (40) ein Anzeigefeld (47) zum Anzeigen des Neigungswinkels (α) oder ein Bedienfeld (47) zum Eingeben des Neigungswinkels (α) aufweist.

13. Vorrichtung nach einem der Ansprüche 1 bis 12, **dadurch gekennzeichnet, dass** die Steuer- und Anzeigeeinrichtung (40) einen Rechner (41), ein Eingabegerät (42) und einen Monitor (43) umfasst.

14. Vorrichtung nach einem der Ansprüche 1 bis 13, **dadurch gekennzeichnet, dass** die Steuer- und Anzeigeeinrichtung (40) eine Benutzungsschnittstelle umfasst, bei der das Anzeigefeld (44, 45, 46, 47) zugleich ein Bedienfeld (44, 45, 46, 47) ist.

15. Vorrichtung nach einem der Ansprüche 1 bis 14, **dadurch gekennzeichnet, dass** der Messkopf (20) eine Beleuchtungseinheit (23), durch welche der Reifen (10) beleuchtet wird, ein Shearingelement (25, 26, 27), durch das die von dem Reifen (10) rückgestreuten Lichtbündel zur Interferenz gebracht werden, und eine Kamera (21) aufweist, wobei die Kamera (21) mit einem Objektiv (22) versehen ist, das zur Aufnahme der interferierenden Lichtbündel im Strahlengang des Shearingelements (25, 26, 27) angeordnet ist.

16. Vorrichtung nach einem der Ansprüche 1 bis 15, **dadurch gekennzeichnet, dass** die Beobachtungsposition und die Beobachtungsrichtung des Messkopfs (20) für den zu prüfenden Reifen (10) in einem reifenspezifischen Prüfprogramm hinterlegt sind, das in die Steuerund Anzeigeeinrichtung (40) geladen ist.

17. Verfahren zum optischen Prüfen eines Reifens (10), der einen Mittelpunkt (M), eine sich in einer axialen Richtung (z) erstreckende Breite (B₁, B₂) und einen in einer zu der axialen Richtung (z) orthogonalen Reifenebene (RME, RME₁, RME₂, MBE) liegenden Durchmesser (D₁, D₂) hat, mit folgenden Verfahrensschritten:
ein Messkopf (20), durch den der Reifen (10) abtastbar ist und der mit einer Abbildungsoptik (24) versehen ist, die eine optische Achse (A) hat, wird mittels eines Positionierungsmittels (30) in einer Beobachtungsposition positioniert und in einer durch die optische Achse (A) bestimmten Beobachtungsrichtung ausgerichtet und
mittels einer Steuer- und Anzeigeeinrichtung (40) wird das Positionierungsmittel (30) gesteuert;
wobei der Messkopf (20) und der Reifen (10) mittels des Positionierungsmittels (30) relativ zueinander um eine Rollachse (R), die sich durch den Mittelpunkt (M) des Reifens (10) in der axialen Richtung (z) erstreckt, gedreht werden;
wobei die Koordinaten der Position des Messkopfs (20) mittels der Steuer- und Anzeigeeinrichtung (40) eingegeben oder ausgegeben werden und
wobei die Koordinaten durch ein reifenspezifisches Koordinatensystem festgelegt werden, dessen Ursprung (0) im Schnittpunkt von Reifenebene (RME, RME₁, RME₂, MBE) und der Rollachse (R) liegt.

18. Verfahren nach Anspruch 17, **dadurch gekennzeichnet, dass**
der Messkopf (20) mittels des Positionierungsmittels (30) in einer axialen Richtung (z) bewegt wird oder
der Messkopf (20) mittels des Positionierungsmittels (30) in einer radialen Richtung (x) bewegt wird oder
oder
der Messkopf (20) mittels des Positionierungsmittels (30) um eine orthogonal zu der Rollachse (R) verlaufenden Schwenkachse (S) gedreht wird.

19. Verfahren nach Anspruch 17 oder 18, **dadurch gekennzeichnet, dass** die Abbildungsoptik (24) einen auf der optischen Achse (A) liegenden Hauptpunkt (H) hat, wobei die Beobachtungsposition durch den Hauptpunkt (H) bestimmt wird.

20. Verfahren nach Anspruch 19, **dadurch gekennzeichnet, dass** die optische Achse (A) oder der Hauptpunkt (H) durch das Positionierungsmittels (30) eingemessen wird.

21. Verfahren nach einem der Ansprüche 17 bis 20, **dadurch gekennzeichnet, dass**
die räumliche Verschiebung (a, a₁, a₂) des Messkopfs (20) in axialer Richtung (z) oder
die räumliche Verschiebung (r, r₁, r₂) des Messkopfs (20) in radialer Richtung (x) oder
der Drehwinkel (ϕ) der Rotation des Messkopfs (20) relativ zu dem Reifen (10) oder
ein Neigungswinkel (α) zwischen der optische Achsen (A) und der Reifenebene (RME, RME₁, RME₂, MBE)
mittels wenigstens eines Anzeigefelds (44, 45, 46, 47) der Steuer- und Anzeigeeinrichtung (40) angezeigt oder mittels wenigstens eines Bedienfelds (44, 45, 46, 47) der Steuer- und Anzeigeeinrichtung (40) eingegeben wird.

22. Verfahren nach Anspruch 21, **dadurch gekennzeichnet, dass** der Drehwinkel (ϕ) der Rotation des Messkopfs (20) in Bezug auf eine vorgegebene Kennzeichnung des Reifens (10), vorzugsweise eine das Herstellungsdatum des Reifens angebende Nummer (DOT), angezeigt wird.

23. Verfahren nach einem der Ansprüche 17 bis 23, **dadurch gekennzeichnet, dass** der Reifen (10) mittels einer Beleuchtungseinheit (23) des Messkopfs (20) beleuchtet wird, die von dem Reifen (10) rückgestreuten Lichtbündel mittels eines Shearingelements (25, 26, 27) des Messkopfs (20) zur Interferenz gebracht werden und die interferierenden Lichtbündel mittels eines im Strahlengang des Shearingelements (25, 26, 27) angeordneten Objektivs (22) einer Kamera (21) aufgenommen werden.

24. Verfahren nach einem der Ansprüche 17 bis 23, **dadurch gekennzeichnet, dass** die Beobachtungsposition und die Beobachtungsrichtung des Messkopfs (20) für den zu prüfenden Reifen (10) in einem reifenspezifischen Prüfprogramm hinterlegt sind, das in die Steuerund Anzeigeeinrichtung (40) geladen wird.

## Claims

1. A device for optically testing a tyre (10) having a centerpoint (M), a width (B₁, B₂) extending in an axial direction (z) and a diameter (D₁, D₂) located in a tyre plane (RME, RME₁, RME₂, MBE) orthogonal to the axial direction (z), comprising
a scanning head (20) by which the tyre (10) is scannable and which is provided with an imaging optic assembly (24) having an optical axis (A);
a positioning means (30) by which the scanning head (20) is positionable in a viewing position and the scanning head (20) can be oriented in a viewing direction defined by the optical axis (A), and
a control and display means (40) by which the positioning means (30) is controllable,
the scanning head (20) and the tyre (10) being rotatable relative to each other around a rolling axis (R) extending in the axial direction (z) through the centerpoint (M) of the tyre by the positioning means (30);
the control and display means (40) comprising at least one user field (44, 45, 46, 47) by which the coordinates of the position of the scanning head (20) can be entered or at least one display field (44, 45, 46, 47) by which the coordinates of the position of the scanning head (20) can be displayed, and
the coordinates being defined by a tyre-specific system of coordinates whose origin (0) is located in the intersection of a tyre plane (RME, RME₁, RME₂, MBE) and the rolling axis (R).

2. The device as set forth in claim 1, **characterized in that** the scanning head (20) is moveable in the axial direction (z) by the positioning means (30).

3. The device as set forth in claim 2, **characterized in that** the control and display means (40) includes a display field (44) for displaying the spatial offset (a, a₁, a₂) of the scanning head (20) in the axial direction (z).

4. The device as set forth in claim 2 or 3, **characterized in that** the control and display means (40) includes a display field (44) for entering the spatial offset (a, a₁, a₂) of the scanning head (20) in the axial direction (z).

5. The device as set forth in any of the claims 1 to 4, **characterized in that** the scanning head (20) is moveable in a radial direction (x) by the positioning means (30).

6. The device as set forth in claim 5, **characterized in that** the control and display means (40) includes a display field (45) for displaying the spatial offset (r, r₁, r₂) of the scanning head (20) in the radial direction (x).

7. The device as set forth in claim 5 or 6, **characterized in that** the control and display means (40) includes a display field (45) for entering the spatial offset (r, r₁, r₂) of the scanning head (20) in the radial direction (x).

8. The device as set forth in any of the claims 1 to 7, **characterized in that** the control and display means (40) includes a display field (46) for displaying the angle of rotation (ϕ) of the rotation of the scanning head (20) relative to the tyre (10).

9. The device as set forth in claim 8, **characterized in that** the control and display means (40) includes a user field (46) for entering the angle of rotation (ϕ) of the rotation of the scanning head (20) relative to the tyre (10).

10. The device as set forth in any of the claims 1 to 9, **characterized in that** the scanning head (20) is rotatable about a pivot axis (S) oriented orthogonal to the rolling axis (R) by the positioning means (30).

11. The device as set forth in any of the claims 1 to 10, **characterized in that** the imaging optic assembly (24) has a main point (H) located on the optical axis (A), the viewing position being defined by the main point (H).

12. The device as set forth in claim 11, **characterized in that** the optical axis (A) and the tyre plane (RME, RME₁, RME₂, MBE) include an angle of inclination (α), the control and display means (40) including a display field (47) for displaying the angle of inclination (α) or a user field (47) for entering the angle of inclination (α).

13. The device as set forth in any of the claims 1 to 12, **characterized in that** the control and display means (40) comprises a computer (41), an input device (42) and a monitor (43).

14. The device as set forth in any of the claims 1 to 13, **characterized in that** the control and display means (40) comprises a user interface in which the display field (44, 45, 46, 47) doubles as a user field (44, 45, 46, 47).

15. The device as set forth in any of the claims 1 to 14, **characterized in that** the scanning head (20) includes an illuminator (23) for illuminating the tyre (10), a shearing element (25, 26, 27) for producing an interference from the light beams reflected by the tyre (10), and a camera (21), the camera (21) being provided with an objective lens (22) arranged for receiving the interfering light beams in the beam path of the shearing element (25, 26, 27).

16. The device as set forth in any of the claims 1 to 15, **characterized in that** the viewing position and the viewing direction of the scanning head (20) for the tyre (10) to be tested is stored in tyre-specific testing program loaded into the control and display means (40).

17. A method for optically testing a tyre (10) featuring a centerpoint (M), a width (B1, B2) extending in an axial direction (z), and a diameter (D₁, D₂) located in a tyre plane (RME, RME₁, RME₂, MBE) orthogonal to the axial direction (z), comprising the following steps in the method:
positioning a scanning head (20), by which the tyre (10) is scannable and which is provided with a imaging optic assembly (24) having an optical axis (A), by means of a positioning means (30) in a viewing position and orienting the scanning head (20) in a viewing direction defined by the optical axis (A), and
controlling the positioning means (30) by means of a control and display means (40);
the scanning head (20) and the tyre (10) being rotated relative to each other around a rolling axis (R) extending in the axial direction (z) through the centerpoint (M) of the tyre (10) by means of the positioning means (30);
the coordinates of the position of the scanning head (20) being inputted or outputted by means of a control and display means (40) and
the coordinates being defined by a tyre-specific system of coordinates whose origin (0) is located in the intersection of a tyre plane (RME, RME₁, RME₂, MBE) and the rolling axis (R).

18. The method as set forth in claim 17, **characterized in that**
the scanning head (20) is moved by means of the positioning means (30) in an axial direction (z) or
the scanning head (20) is moved by means of the positioning means (30) in a radial direction (x) or
the scanning head (20) is rotated by means of the positioning means (30) about a pivot axis (S) oriented orthogonal to the rolling axis (R).

19. The method as set forth in claim 17 or 18, **characterized in that** the imaging optic assembly (24) has a main point (H) located on the optical axis (A), the viewing position being defined by the main point (H).

20. The method as set forth in claim 19, **characterized in that** the optical axis (A) or the main point (H) is calibrated by the positioning means (30).

21. The method as set forth in any of the claims 17 to 20, **characterized in that**
the spatial offset (a, a₁, a₂) of the scanning head (20) in the axial direction (z) or
the spatial offset (r, r₁, r₂) of the scanning head (20) in the radial direction (x) or
the angle of rotation (ϕ) of the rotation of the scanning head (20) relative to the tyre (10) or
an angle of inclination (α) between the optical axis (A) and the tyre plane (RME, RME₁, RME₂, MBE)
is displayed by means of at least one display field (44, 45, 46, 47) of the control and display means (40) or is entered by means of at least one user field (44, 45, 46, 47) of the control and display means (40).

22. The method as set forth in claim 21, **characterized in that** the angle of rotation (ϕ) of the rotation of the scanning head (20) is displayed relative to a predefined marking of the tyre (10), preferably a number (DOT) indicating the production date of the tyre.

23. The method as set forth in any of the claims 17 to 22, **characterized in that** the tyre (10) is illuminated by means of an illuminator (23) of the scanning head (20), the light beams reflected from the tyre (10) being rendered into interference by means of a shearing element (25, 26, 27) of the scanning head (20) and the interfering light beams are recorded by means of an objective lens (22) arranged in the beam path of the shearing element (25, 26, 27) of a camera (21).

24. The method as set forth in any of the claims 17 to 23, **characterized in that** the viewing position and the viewing direction of the scanning head (20) for the tyre (10) to be tested is stored in tyre-specific testing program loaded into the control and display means (40).

## Revendications

1. Dispositif pour le contrôle optique d'un pneumatique (10), qui possède un centre (M), une largeur (B₁, B₂) s'étendant dans une direction axiale (z), et un diamètre (D₁, D₂) disposé dans un plan du pneumatique (RME, RME₁, RME₂, MBE) orthogonal à la direction axiale (z), comprenant
une tête de mesure (20) au moyen de laquelle il est possible de palper le pneumatique (10) et qui est doté d'une optique d'imagerie (24) présentant un axe optique (A) ;
un moyen de positionnement (30), grâce auquel la tête de mesure (20) peut être positionnée dans une position d'observation et peut être orientée dans une direction d'observation déterminée par l'axe optique (A), et
un dispositif de commande et d'affichage (40), au moyen duquel le moyen de positionnement (30) peut être commandé ;
dans lequel la tête de mesure (20) et le pneumatique (10) sont susceptibles d'être tournés à l'aide du moyen de positionnement (30) l'un par rapport à l'autre autour d'un axe de roulis (R) qui s'étend à travers le centre (M) du pneumatique (10) dans la direction axiale (z) ;
dans lequel le dispositif de commande et d'affichage (40) comprend au moins un champ de manipulation (44, 45, 46, 47) au moyen duquel les coordonnées de la position de la tête de mesure (20) peuvent être saisies, ou au moins un champ d'affichage (44, 45, 46, 47) au moyen duquel les coordonnées de la position de la tête de mesure (20) peuvent être affichées, et
dans lequel les coordonnées sont déterminées par un système de coordonnées spécifiques au pneumatique, dont l'origine (0) se trouve au point d'intersection du plan du pneumatique (RME, RME₁, RME₂, MBE) et de l'axe de roulis (R).

2. Dispositif selon la revendication 1, **caractérisé en ce que** la tête de mesure (20) est déplaçable dans la direction axiale (z) à l'aide du moyen de positionnement (30).

3. Dispositif selon la revendication 2, **caractérisé en ce que** le dispositif de commande et d'affichage (40) comprend un champ d'affichage (44) pour afficher le déplacement dans l'espace (a, a₁, a₂) de la tête de mesure (20) dans la direction axiale (z).

4. Dispositif selon la revendication 2 ou 3, **caractérisé en ce que** le dispositif de commande et d'affichage (40) comprend un champ de manipulation (44) pour saisir le déplacement dans l'espace (a, a₁, a₂) de la tête de mesure (20) dans la direction axiale (z).

5. Dispositif selon l'une des revendications 1 à 4, **caractérisé en ce que** la tête de mesure (20) est déplaçable dans une direction radiale (x) à l'aide du moyen de positionnement (30).

6. Dispositif selon la revendication 5, **caractérisé en ce que** le dispositif de commande et d'affichage (40) comprend un champ d'affichage (45) pour afficher le déplacement dans l'espace (r, r₁, r₂) de la tête de mesure (20) dans la direction radiale (x).

7. Dispositif selon la revendication 5 ou 6, **caractérisé en ce que** le dispositif de commande et d'affichage (40) comprend un champ de manipulation (45) pour la saisie du déplacement dans l'espace (r, r₁, r₂) de la tête de mesure (20) dans la direction radiale (x).

8. Dispositif selon l'une des revendications 1 à 7, **caractérisé en ce que** le dispositif de commande et d'affichage (40) comprend un champ d'affichage (46) pour afficher l'angle de rotation (ϕ) de la rotation de la tête de mesure (20) par rapport au pneumatique (10).

9. Dispositif selon la revendication 8, **caractérisé en ce que** le dispositif de commande et d'affichage (40) comprend un champ de manipulation (46) pour la saisie de l'angle de rotation (ϕ) de la rotation de la tête de mesure (20) par rapport au pneumatique (10).

10. Dispositif selon l'une des revendications 1 à 9, **caractérisé en ce que** la tête de mesure (20) est en rotation autour d'un axe de pivotement (S) s'étendant perpendiculairement à l'axe de roulis (R), à l'aide du moyen de positionnement (30).

11. Dispositif selon l'une des revendications 1 à 10, **caractérisé en ce que** l'optique d'imagerie (24) comporte un point principal (H) situé sur l'axe optique (A), la position d'observation étant déterminée par le point principal (H).

12. Dispositif selon la revendication 11, **caractérisé en ce que** l'axe optique (A) et le plan du pneumatique (RME, RME₁, RME₂, MBE) enferme un angle d'inclinaison (α), et le dispositif de commande et d'affichage (40) comprend un champ d'affichage (47) pour afficher l'angle d'inclinaison (α), ou bien un champ de manipulation (47) pour saisir l'angle inclinaison (α).

13. Dispositif selon l'une des revendications 1 à 12, **caractérisé en ce que** le dispositif de commande et d'affichage (40) comprend un calculateur (41), un appareil de saisie (42) et un moniteur (43).

14. Dispositif selon l'une des revendications 1 à 13, **caractérisé en ce que** le dispositif de commande et d'affichage (40) comprend une interface utilisateur dans laquelle le champ d'affichage (44, 45, 46, 47) est simultanément un champ de manipulation (44, 45, 46, 47).

15. Dispositif selon l'une des revendications 1 à 14, **caractérisé en ce que** la tête de mesure (20) comprend une unité d'éclairage (23) au moyen de laquelle est éclairé le pneumatique (10), un élément de cisaillement (25, 26, 27) au moyen duquel les faisceaux de lumière diffusés en retour par le pneumatique (10) sont amenés en interférence, et une caméra (21), ladite caméra (21) étant pourvue d'un objectif (22) qui est agencé pour recevoir le faisceau de lumière en interférence, dans le trajet de rayonnement de l'élément de cisaillement (25, 26, 27).

16. Dispositif selon l'une des revendications 1 à 15, **caractérisé en ce que** la position d'observation et la direction d'observation de la tête de mesure (20) pour le pneumatique qu'il s'agit de contrôler (10) sont mémorisées dans un programme de contrôle spécifique au pneumatique qui est chargé dans le dispositif de commande et d'affichage (40).

17. Procédé pour le contrôle optique d'un pneumatique (10) qui comporte un centre (M), une largeur (B₁, B₂) s'étendant dans une direction axiale (z), et un diamètre (D₁, D₂) disposé dans un plan de pneumatique (RME, RME₁, RME₂, MBE) orthogonal à la direction radiale (z), comprenant les étapes de procédé suivantes :
une tête de mesure (20), au moyen de laquelle le pneumatique (10) peut être palpé et qui est dotée d'une optique d'imagerie (24) possédant un axe optique (A), est positionnée dans une position d'observation à l'aide d'un moyen de positionnement (30) et orientée dans une direction d'observation déterminée par l'axe optique (A), et
le moyen de positionnement (30) est commandé au moyen d'un dispositif de commande et d'affichage (40),
dans lequel la tête de mesure (20) et le pneumatique (10) sont tournés à l'aide du moyen de positionnement (30) l'un par rapport à l'autre autour d'un axe de roulis (R) qui s'étend à travers le centre (M) du pneumatique (10) dans la direction axiale (z) ;
dans lequel les coordonnées de la position de la tête de mesure (20) sont saisies ou délivrées au moyen du dispositif de commande et d'affichage (40), et
dans lequel les coordonnées sont déterminées par un système de coordonnées spécifiques au pneumatique dont l'origine (0) se trouve au point d'intersection du plan du pneumatique (RME, RME₁, RME₂, MBE) et de l'axe de roulis (R).

18. Procédé selon la revendication 17, **caractérisé en ce que**
la tête de mesure (20) est déplacée dans une direction axiale (z) à l'aide du moyen de positionnement (30), ou
la tête de mesure (20) est déplacée dans une direction radiale (x) à l'aide du moyen de positionnement (30), ou
la tête de mesure (20) est tournée à l'aide du moyen de positionnement (30) autour d'un axe de pivotement (S) s'étendant de manière orthogonale à l'axe de roulis (R).

19. Procédé selon la revendication 17 ou 18, **caractérisé en ce que** l'optique d'imagerie (24) comporte un point principal (H) situé sur l'axe optique (A), et la position d'observation est déterminée par le point principal (H).

20. Procédé selon la revendication 19, **caractérisé en ce que** l'axe optique (A) ou le point principal (H) est positionné par le moyen de positionnement.

21. Procédé selon l'une des revendications 17 à 20, **caractérisé en ce que**
le déplacement dans l'espace (a, a₁, a₂) de la tête de mesure (20) en direction axiale (z), ou
le déplacement dans l'espace (r, r₁, r₂) de la tête de mesure (20) en direction radiale (x), ou
l'angle de rotation (ϕ) de la rotation de la tête de mesure (20) par rapport au pneumatique (10), ou
un angle d'inclinaison (α) entre l'axe optique (A) et le plan du pneumatique (RME, RME₁, RME₂, MBE)
est affiché au moyen d'au moins un champ d'affichage (44, 45, 46, 47) du dispositif de commande et d'affichage (40), ou bien est saisi au moyen d'au moins un champ de manipulation (44, 45, 46, 47) du dispositif de commande et d'affichage (40).

22. Procédé selon la revendication 21, **caractérisé en ce que** l'angle de rotation (ϕ) de la rotation de la tête de mesure (20) est affiché par référence à une désignation prédéterminée du pneumatique (10), de préférence un numéro (DOT) indiquant la date de fabrication du pneumatique.

23. Procédé selon l'une des revendications 17 à 22, **caractérisé en ce que** le pneumatique (10) est éclairé au moyen d'une unité d'éclairage (23) de la tête de mesure (20), les faisceaux de lumière diffusée en retour par le pneumatique (10) sont amenés en interférence au moyen d'un élément de cisaillement (25, 26, 27) de la tête de mesure (20), et les faisceaux de lumière en interférence sont enregistrés au moyen d'un objectif (22) d'une caméra (21), agencé dans le trajet des rayons de l'élément de cisaillement (25, 26, 27).

24. Procédé selon l'une des revendications 17 à 23, **caractérisé en ce que** la position d'observation et la direction de l'observation de la tête de mesure (20) pour le pneumatique qu'il s'agit de contrôler (10) sont mémorisées dans un programme de contrôle spécifique au pneumatique, qui est chargé dans le dispositif de commande et d'affichage (40).
